# FASCICULE DE BREVET EUROPEEN

(11) **EP 2 550 491 B1**
(45) Date de publication et mention de la délivrance du brevet: **01.08.2018**
(21) Numéro de dépôt: 11710425.7
(22) Date de dépôt: 09.03.2011
(51) Int. Cl.: F25B 5/04, F25B 41/04, F25B 6/04, B60H 1/00

(54) **BOUCLE DE CLIMATISATION COMPRENANT UN ÉCHANGEUR THERMIQUE DIRECTEMENT INTERPOSE ENTRE DEUX ORGANES DE DÉTENTE**
KLIMATISIERUNGSKREISLAUF MIT DIREKT ZWISCHEN ZWEI EXPANSIONSTEILEN POSITIONIERTEM WÄRMETAUSCHER
AIR-CONDITIONING LOOP INCLUDING A HEAT EXCHANGER POSITIONED DIRECTLY BETWEEN TWO EXPANSION MEMBERS

(30) Priorité: 25.03.2010 FR 1001199
(43) Date de publication de la demande: 30.01.2013
(73) Titulaire: Valeo Systèmes Thermiques, 78321 Le Mesnil St Denis Cedex (FR)
(72) Inventeur: YAHIA, Mohamed, FR-75005 Paris (FR)
(86) Numéro de dépôt international: PCT/EP2011/001148
(87) Numéro de publication internationale: WO 2011/116883

(56) Documents cités:
- EP-A2- 1 826 508
- DE-A1- 10 242 369
- FR-A1- 2 780 346
- JP-A- 2002 019 443
- US-A- 5 983 652

## Description

### Domaine technique de l'invention.

L'invention est du domaine des installations de ventilation, de chauffage et/ou de climatisation d'un véhicule automobile. Ella a pour objet une boucle de climatisation comprenant un échangeur thermique principal, un échangeur thermique secondaire et un bloc de distribution.

### Etat de la technique.

Un véhicule automobile est couramment équipé d'un système de climatisation pour modifier les paramètres aérothermiques de l'air contenu à l'intérieur de l'habitacle du véhicule. Une telle modification est obtenue à partir de la délivrance d'au moins un flux d'air à l'intérieur de l'habitacle.

Le système de climatisation comprend une installation principale de ventilation, de chauffage et/ou de climatisation qui canalise la circulation d'un flux d'air principal préalablement à la délivrance de ce dernier à l'intérieur de l'habitacle. L'installation principale est constituée d'un boîtier avant réalisé en matière plastique et logé sous une planche de bord du véhicule. L'installation principale est destinée à modifier les paramètres aérothermiques du véhicule.

Le système de climatisation comprend aussi une installation secondaire de ventilation, de chauffage et/ou de climatisation qui canalise la circulation d'un flux d'air secondaire préalablement à la délivrance de ce dernier à l'intérieur de l'habitacle ou vers l'extérieur. L'installation secondaire se comporte soit comme une installation secondaire soit comme extracteur. L'installation secondaire se situe dans une zone arrière du véhicule où prend place un passager du véhicule. La zone arrière est située derrière la zone avant selon un sens courant de progression du véhicule.

Pour modifier une température du flux d'air principal, le système de climatisation comprend une boucle de climatisation à l'intérieur de laquelle circule un fluide réfrigérant. La boucle de climatisation comprend un échangeur thermique principal logé à l'intérieur de l'installation principale et un échangeur thermique secondaire placé à l'intérieur de l'installation secondaire. L'échangeur thermique principal permet un transfert de chaleur entre le flux d'air principal et le fluide réfrigérant tandis que l'échangeur thermique secondaire permet un transfert de chaleur entre le flux d'air secondaire et le fluide réfrigérant. La boucle de climatisation comprend aussi un compresseur pour porter à haute pression le fluide réfrigérant et deux organes de détente pour permettre un passage du fluide réfrigérant depuis la haute pression vers une basse pression.

Un problème posé par l'utilisation d'un tel système de climatisation réside dans le fait que ce dernier ne permet pas un fonctionnement en mode chauffage de l'échangeur thermique principal et/ou de l'échangeur thermique secondaire dans lesquels la température du flux d'air principal et/ou la température du flux d'air secondaire sont augmentées lors de leur traversée respective de l'échangeur thermique principal et de l'échangeur thermique secondaire. De même, un tel système de climatisation ne permet pas un fonctionnement en mode déshumidification dans lequel le flux d'air avant est, dans un premier temps, refroidi, puis réchauffé. Un tel système de climatisation ne peut pas être utilisé comme pompe à chaleur de sorte à chauffer le flux d'air principal et/ou le flux d'air secondaire. Le document JP-A-2002019443 décrit un système selon le préambule de la revendication 1.

### Objet de l'invention.

Le but de la présente invention est de proposer une boucle de climatisation comprenant au moins un échangeur thermique principal et un échangeur thermique secondaire qui est apte à fonctionner selon divers mode, dont un mode climatisation dans lequel un flux d'air principal est refroidi, le flux d'air secondaire pouvant alors être chauffé et pulsé vers l'extérieur ou refroidi et pulsé vers l'habitacle, un mode chauffage dans lequel le flux d'air principal est chauffé et le flux d'air secondaire est réchauffé et pulsé vers l'habitacle ou refroidi et pulsé vers l'extérieur, au moins un mode dégivrage d'un échangeur de chaleur fluide réfrigérant / air ambiant que comprend la boucle de climatisation et un mode déshumidification dans lequel le flux d'air principal est dans un premier temps refroidi, puis réchauffé. Un autre but de la présente invention est de proposer un bloc de distribution qui est préférentiellement constitutif d'une telle boucle de climatisation.

Une boucle de climatisation de la présente invention comprend les caractéristiques de la revendication 1. L'avantage d'une telle architecture de boucle de climatisation est de pouvoir utiliser l'échangeur thermique secondaire soit comme un évaporateur soit comme un condenseur. La présence des deux organes de détente assure l'ajustement des niveaux de température du fluide réfrigérant à l'intérieur de l'échangeur thermique principal et de l'échangeur thermique secondaire. La présence des deux organes de détente permet également d'effecteur une double détente au fluide réfrigérant, ce qui améliore le coefficient de performance de la boucle de climatisation sans requérir un échangeur de chaleur interne, dit « IHX ». En effet, cet échangeur de chaleur interne dans lequel circule à la fois le fluide réfrigérant à haute pression et le fluide réfrigérant à basse pression pour assurer un échange de chaleur entre le fluide à haute pression et le fluide à basse pression n'est pas nécessaire dans une telle boucle de climatisation. Ceci diminue encore le coût de fabrication d'une telle boucle de climatisation.

La boucle de climatisation comprend avantageusement un troisième organe de détente qui est interposé sur la ligne principale entre l'accumulateur et l'échangeur thermique principal.

De préférence, la ligne secondaire comporte selon un sens de déplacement du fluide réfrigérant à l'intérieur de la ligne secondaire : un échangeur de chaleur fluide réfrigérant / air ambiant et une électrovanne.

La boucle de climatisation comprend avantageusement une première dérivation qui est ménagée entre la vanne trois-voies et un point médian de la ligne principale.

Le point médian est par exemple situé entre l'échangeur thermique principal et l'accumulateur.

Le point médian est par exemple encore situé entre l'échangeur thermique principal et le troisième organe de détente.
La première dérivation est avantageusement pourvue d'une première vanne de dérivation.
La boucle de climatisation comprend de préférence une deuxième dérivation qui est ménagée entre un point d'attache de la ligne secondaire et un point de liaison de la ligne principale, le point d'attache étant situé entre l'échangeur de chaleur fluide réfrigérant / air ambiant et l'électrovanne, le point de liaison étant situé entre une première sortie de la vanne trois-voies et le premier organe de détente.
La deuxième dérivation est avantageusement pourvue d'une deuxième vanne de dérivation.

De préférence, au moins la vanne trois-voies, l'électrovanne, la vanne de passage, la première vanne de dérivation et la deuxième vanne de dérivation sont regroupées à l'intérieur d'un bloc de distribution.
Le bloc de distribution comprend avantageusement le premier organe de détente et le deuxième organe de détente.
Le bloc de distribution comprend avantageusement le troisième organe de détente.

Un système de climatisation de la présente invention est un système de climatisation comprenant une telle boucle de climatisation ayant les caractéristiques de la revendication 1, le système de climatisation comprenant en outre une installation principale de ventilation, de chauffage et/ou de climatisation qui loge l'échangeur thermique principal, le système de climatisation comprenant enfin une installation secondaire de ventilation, de chauffage et/ou de climatisation qui loge l'échangeur thermique secondaire.

L'installation principale de ventilation, de chauffage et/ou de climatisation loge avantageusement le condenseur intérieure qui est placé en aval de l'échangeur thermique principal selon un sens d'écoulement d'un flux d'air principal à l'intérieur de l'installation avant de ventilation, de chauffage et/ou de climatisation.

Le système de climatisation comprend de préférence un ventilateur et un radiateur qui est constitutif d'un circuit de refroidissement d'un moteur du véhicule, le radiateur étant interposé entre le ventilateur et l'échangeur de chaleur fluide réfrigérant / air ambiant.

### Description des figures.

La présente invention sera mieux comprise à la lecture de la description qui va en être faite d'exemples de réalisation, en relation avec les figures des planches annexées, dans lesquelles :
La fig.1 est une illustration schématique d'un système de climatisation de la présente invention.
Les fig.2 à fig.7 sont des illustrations schématiques de divers modes de fonctionnement du système de climatisation illustré sur la figure précédente.
Les fig.8 à fig.10 sont des illustrations schématiques respectives de variantes de réalisation d'un bloc de distribution constitutif du système de climatisation représenté sur la fig.1.

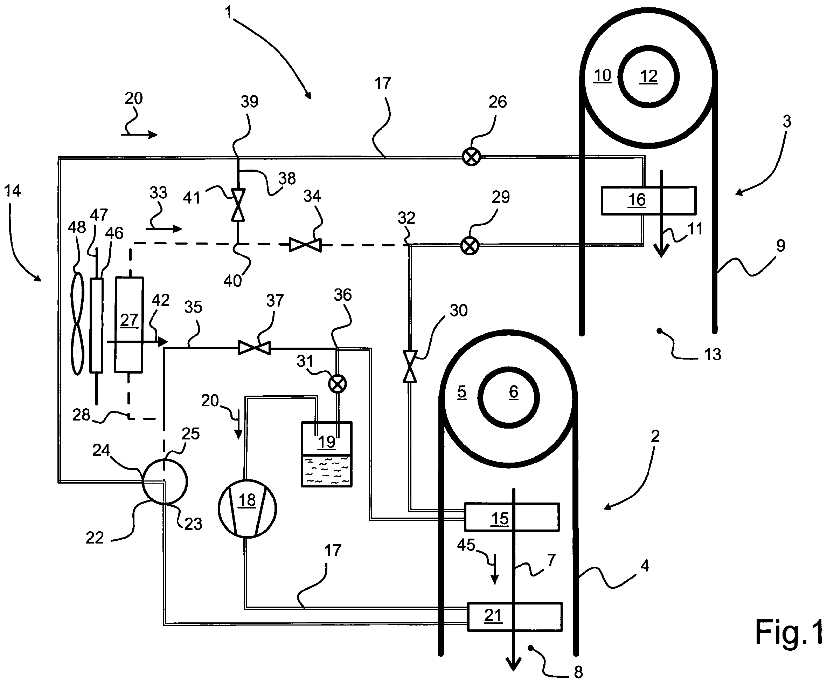

Sur les fig.1 à fig.7, un véhicule automobile est équipé d'un système de climatisation 1 pour modifier les paramètres aérothermiques de l'air contenu à l'intérieur de l'habitacle du véhicule. Le système de climatisation 1 est un système multi-zones, plus particulièrement double-zones, qui est à même de traiter thermiquement simultanément et indépendamment l'air contenu dans au moins deux zones distinctes de l'habitacle du véhicule. Ces deux zones sont par exemple une zone principale par exemple zone avant où se situe le conducteur du véhicule et une zone secondaire comme par exemple la zone arrière.

Pour ce faire, le système de climatisation 1 comprend une installation principale 2 de ventilation, de chauffage et/ou de climatisation et une installation secondaire 3 de ventilation, de chauffage et/ou de climatisation. L'installation principale 2 est principalement constituée d'un boîtier principal 4 réalisé en matière plastique. L'installation principale 2 loge un pulseur principal 5 pour faire circuler un flux d'air principal 6 depuis au moins une bouche d'admission d'air 7 vers au moins une bouche de délivrance d'air 8 que comporte le boîtier principal 4. La bouche de délivrance d'air 8 est située à l'intérieur de la zone principal du véhicule. L'installation secondaire 3 est principalement constituée d'un boîtier secondaire 9 réalisé en matière plastique. L'installation secondaire 3 est séparée de l'installation principale 2, c'est-à-dire que les deux installations sont distinctes l'une de l'autre. L'installation arrière 3 loge un pulseur arrière 10 pour faire circuler un flux d'air secondaire 11 depuis au moins une bouche d'arrivée d'air 12 vers au moins une bouche de d'évacuation d'air 13 que comporte le boîtier arrière 9. La bouche d'évacuation d'air 13 est située à l'intérieur de la zone secondaire du véhicule et permet de pulser l'air dans l'habitacle ou vers l'extérieur.

Le système de climatisation 1 comprend également une boucle de climatisation 14 à l'intérieur de laquelle circule un fluide réfrigérant, tel qu'un fluide sous-critique, R134a ou analogue. La boucle de climatisation 14 comprend un échangeur thermique principal 15 qui est logé à l'intérieur de l'installation principale 2 et un échangeur thermique secondaire 16 qui est placé à l'intérieur de l'installation secondaire 3. Ainsi une unique boucle de climatisation 14 est utilisée par les installations principale et secondaire. L'échangeur thermique principal 15 est destiné à modifier une température du flux d'air principal 7 préalablement à sa délivrance à l'intérieur de l'habitacle tandis que l'échangeur thermique secondaire 16 est destiné à modifier une température du flux d'air arrière 11 préalablement à sa délivrance à l'intérieur de l'habitacle ou vers l'extérieur. Selon l'invention, l'échangeur thermique principal 15 et l'échangeur thermique secondaire 16 sont disposés en série à l'intérieur de la boucle de climatisation 14. Ceci présente l'avantage de restreindre le nombre de ligne et/ou de dérivation à l'intérieur de la boucle de climatisation. En particulier, les parties de la boucle de climatisation comportant respectivement l'échangeur thermique principal et l'échangeur thermique secondaire sont toujours utilisées, c'est-à-dire traversées par le fluide réfrigérant, et ce quel que soit le mode de fonctionnement envisagé pour la boucle de climatisation. Une économie de nombre de ligne et/ou de dérivation permet de réduire le coût d'une telle boucle de climatisation.

La boucle de climatisation 14 comprend une ligne principale 17 de circulation du fluide réfrigérant, qui est représentée en double ligne sur la fig.1. La ligne principale 17 comporte un compresseur 18, notamment électrique, pour amener le fluide réfrigérant à une haute pression. Le compresseur 18 est préférentiellement associé à un accumulateur 19 qui est apte à empêcher une admission d'un reliquat de fluide réfrigérant à l'état liquide à l'intérieur du compresseur 18. L'accumulateur 19 est placé en amont du compresseur 18 selon un sens de circulation 20 du fluide réfrigérant à l'intérieur de la ligne principale 17. Cette dernière comporte un condenseur 21 qui est placé directement en aval du compresseur 18 selon le sens de circulation 20 du fluide réfrigérant à l'intérieur de la ligne principale 17. A l'intérieur du condenseur 21, le fluide réfrigérant est à même de céder de la chaleur à pression relativement constante à son environnement. Le condenseur 21 est logé à l'intérieur de l'installation principale 4 de telle sorte qu'il est apte à réchauffer le flux d'air principal 7 qui le traverse. Le condenseur 21 est placé en aval de l'échangeur thermique principal 15 selon le sens d'écoulement du flux d'air principal 7. La ligne principale 17 comprend ensuite une vanne trois-voies 22 qui comporte une entrée 23 et deux sorties 24,25. L'entrée 23 de la vanne trois-voies 22 reçoit le fluide réfrigérant en provenance du condenseur 21. Puis, la vanne trois-voies 22 est apte à renvoyer le fluide réfrigérant soit vers un premier organe de détente 26 par l'intermédiaire d'une première sortie 24 qui est constitutive de la ligne principale 17, soit vers un échangeur de chaleur fluide réfrigérant / air ambiant 27 par l'intermédiaire d'une deuxième sortie 25 qui est constitutive d'une ligne secondaire 28 de la boucle de climatisation 14. Le premier organe de détente 26 est placé directement en aval de la première sortie 24 de la vanne trois-voies 22 selon le sens de circulation 20 du fluide réfrigérant à l'intérieur de la ligne principale 17. L'échangeur thermique secondaire 16 est interposé sur la ligne principale 17 entre le premier organe de détente 26 et un deuxième organe de détente 29. Autrement dit, l'échangeur thermique secondaire 16 est disposé directement en aval du premier organe de détente 26 et directement en amont du deuxième organe de détente 29 selon le sens de circulation 20 du fluide réfrigérant à l'intérieur de la ligne principale 17. Ainsi, le premier organe de détente 26, l'échangeur thermique secondaire 16, le deuxième organe de détente 29 et l'échangeur thermique principal 15 sont disposés en série. En outre, l'échangeur thermique secondaire 16 est toujours parcouru par le fluide réfrigérant dans le même sens de circulation, et ce quelque soit le mode d'utilisation de la boucle de climatisation. Le premier organe de détente 26 et le deuxième organe de détente 29 sont préférentiellement des détendeurs à commande électronique à l'intérieur desquels le fluide réfrigérant subit une détente depuis la haute pression vers une basse pression. De préférence encore, au moins un des deux organes de détente 26,29 est apte à interdire une circulation du fluide réfrigérant à l'intérieur de la ligne principale 17. Cette dernière comprend également une vanne de passage 30 qui est apte à autoriser ou interdire une circulation du fluide réfrigérant à l'intérieur de la ligne principale 17. La vanne de passage 30 est placée directement en aval du deuxième organe de détente 29 selon le sens de circulation 20 du fluide réfrigérant à l'intérieur de la ligne principale 17. La vanne de passage 30 est placée directement en amont de l'échangeur thermique principal 15 selon le sens de circulation 20 du fluide réfrigérant à l'intérieur de la ligne principale 17. Enfin, un troisième organe de détente 31 est accessoirement disposé sur la ligne principale 17 entre l'échangeur thermique principal 15 et l'accumulateur 19. Le troisième organe de détente 31 permet également une détente du fluide réfrigérant.

La ligne secondaire 28, représentée en trait pointillé sur la fig.1, s'étend entre la deuxième sortie 25 de la vanne trois-voies 22 et un point intermédiaire 32 de la ligne principale 17 qui est situé entre le deuxième organe de détente 29 et la vanne de passage 30. La ligne secondaire 28 comporte l'échangeur de chaleur fluide réfrigérant / air ambiant 27 qui est placé directement en aval de la deuxième sortie 25 de la vanne trois-voies 22 selon un sens de déplacement 33 du fluide réfrigérant à l'intérieur de la ligne secondaire 28. Cette dernière comprend une électrovanne 34, ou analogue, qui est à même d'autoriser ou d'interdire une circulation du fluide réfrigérant à l'intérieur de la ligne secondaire 28. L'électrovanne 34 est préférentiellement disposée en aval de l'échangeur de chaleur fluide réfrigérant / air ambiant 27 selon le sens de déplacement 33 du fluide réfrigérant à l'intérieur de la ligne secondaire 28. L'échangeur de chaleur fluide réfrigérant / air ambiant 27 permet un transfert de chaleur entre le fluide réfrigérant et un flux d'air ambiant 42, tel qu'un flux d'air extérieur qui traverse ledit échangeur de chaleur 27. Ce dernier est de préférence placé à l'avant du véhicule, sous un capot moteur, pour faciliter un tel transfert de chaleur.

La boucle de climatisation 14 comprend une première dérivation 35, représentée en trait plein sur la fig.1, qui s'étend entre la deuxième sortie 25 et un point médian 36 de la ligne principale 17. Le point médian 36 est situé entre l'échangeur thermique principal 15 et l'accumulateur 19, et plus particulièrement entre l'échangeur thermique principal 15 et le troisième organe de détente 31. La première dérivation 35 comprend une première vanne de dérivation 37 qui est apte à autoriser ou interdire une circulation du fluide réfrigérant à l'intérieur de la première dérivation 35.

La boucle de climatisation 14 comprend une deuxième dérivation 38, représentée en trait plein sur la fig.1, qui s'étend entre un point de liaison 39 de la ligne principale 17 qui est placé sur cette dernière entre la première sortie 24 de la vanne trois-voies 22 et le premier organe de détente 26, et un point d'attache 40 de la ligne secondaire 28 qui est placé sur cette dernière entre l'échangeur de chaleur fluide réfrigérant / air ambiant 27 et l'électrovanne 34. La deuxième dérivation 38 est pourvue d'une deuxième vanne de dérivation 41 qui est apte à autoriser ou interdire une circulation du fluide réfrigérant à l'intérieur de la deuxième dérivation 38.

Le système de climatisation 1 comprend enfin un radiateur 46 constitutif d'un circuit de refroidissement 47 d'un moteur du véhicule. Le radiateur 46 est associé à un ventilateur 48 qui est apte à faire circuler le flux d'air ambiant 42 à travers le radiateur 46 puis l'échangeur de chaleur fluide réfrigérant / air ambiant 27. Ces dispositions sont telles qu'un transfert de chaleur depuis un liquide caloporteur circulant à l'intérieur du circuit de refroidissement vers l'échangeur de chaleur fluide réfrigérant / air ambiant 27 est possible.

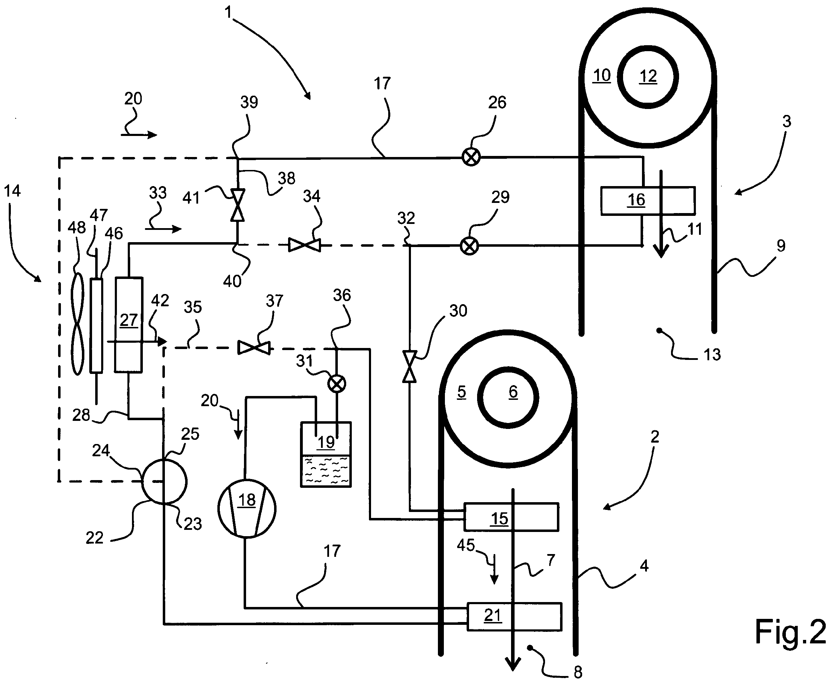

Sur les fig.2 à fig.7, les conduites de fluide réfrigérant à l'intérieur desquelles le fluide réfrigérant circule sont représentées en trait plein tandis que les conduites à l'intérieur desquelles le fluide réfrigérant ne circule pas sont représentées en trait pointillé.

Sur la fig.2, la boucle de climatisation 14 est représentée en mode climatisation dans lequel le flux d'air principal 7 est refroidi préalablement à leur délivrance respective à l'intérieur de l'habitacle et le flux d'air secondaire 11 est soit refroidi et pulsé dans l'habitacle soit réchauffé et pulsé à l'extérieur. Dans cette configuration, la vanne trois-voies 22 permet une circulation du fluide réfrigérant depuis l'entrée 23 vers la deuxième sortie 25, l'électrovanne 34 est fermée de telle sorte que le fluide réfrigérant ne circule pas depuis le point d'attache 40 jusqu'au point intermédiaire 32, la vanne de passage 30 est ouverte de telle sorte que le fluide réfrigérant circule depuis le point intermédiaire 32 jusqu'au point médian 36, la première vanne de dérivation 37 est fermée de telle sorte que le fluide réfrigérant ne circule pas à l'intérieur de la première dérivation 35 et la deuxième vanne de dérivation 41 est ouverte de manière à ce que le fluide réfrigérant circule à l'intérieur de la deuxième dérivation 38. Ces dispositions sont telles que le fluide réfrigérant circule depuis le compresseur 18 jusqu'au condenseur 21, puis circule à travers la vanne trois-voies 22 depuis l'entrée 23 jusqu'à la deuxième sortie 25, puis circule à travers l'échangeur de chaleur fluide réfrigérant / air ambiant 27 qui se comporte comme un condenseur à l'intérieur duquel le fluide réfrigérant cède de la chaleur au flux d'air ambiant 42. Le fluide réfrigérant circule ensuite jusqu'au point d'attache 40 pour emprunter la deuxième dérivation 38 puis retrouver la ligne principale 17. Le fluide réfrigérant circule ensuite à travers le premier organe de détente 26 à l'intérieur duquel le fluide réfrigérant subit ou non une première détente. Puis, le fluide réfrigérant circule à travers l'échangeur thermique secondaire 16 qui se comporte soit comme un évaporateur soit comme un condenseur supplémentaire (ou refroidisseur de fluide réfrigérant) en échangeant de la chaleur avec le flux d'air secondaire 11. Le fluide réfrigérant circule alors jusqu'au deuxième organe de détente 29 où il subit une détente. Ensuite, le fluide réfrigérant circule à travers la vanne de passage 30 pour rejoindre l'échangeur thermique principal 15 qui refroidit le flux d'air avant 7 le traversant. Puis, le fluide réfrigérant rejoint le troisième organe de détente 31 qui est inopérant, aucune détente ne s'y produisant. Enfin le fluide réfrigérant rejoint l'accumulateur 19 puis le compresseur 18. Ces dispositions sont telles que le flux d'air secondaire 11 est refroidi ou réchauffé lors de sa traversée de l'échangeur thermique secondaire 16 et le flux d'air avant 7 est refroidi lors de sa traversée de l'échangeur thermique principal 15. Pour éviter un échauffement du flux d'air principal 7 lors de sa traversée du condenseur 21, ce dernier est susceptible d'être équipé de volets pour empêcher une telle traversée. La mise en oeuvre en mode climatisation d'un tel système de climatisation consiste alors à :
- permettre une circulation du fluide réfrigérant à l'intérieur de la vanne trois-voies depuis l'entrée vers la deuxième sortie et interdire une circulation du fluide réfrigérant à l'intérieur de la vanne trois-voies depuis l'entrée vers la première sortie,
- fermer l'électrovanne,
- ouvrir la vanne de passage,
- fermer la première vanne de dérivation,
- ouvrir la deuxième vanne de dérivation,
- permettre dans un premier cas une détente du fluide réfrigérant à l'intérieur du premier organe de détente, l'échangeur thermique secondaire se comportant comme un évaporateur, l'air refroidi étant alors pulsé dans l'habitacle, et dans un second cas, le premier organe de détende est ouvert et l'échangeur thermique secondaire agit comme condenseur supplémentaire c'est-à-dire un refroidisseur de fluide réfrigérant, l'air réchauffé est alors pulsé vers l'extérieur,
- permettre une détente du fluide réfrigérant à l'intérieur du deuxième organe de détente,
- interdire une détente du fluide réfrigérant à l'intérieur du troisième organe de détente.

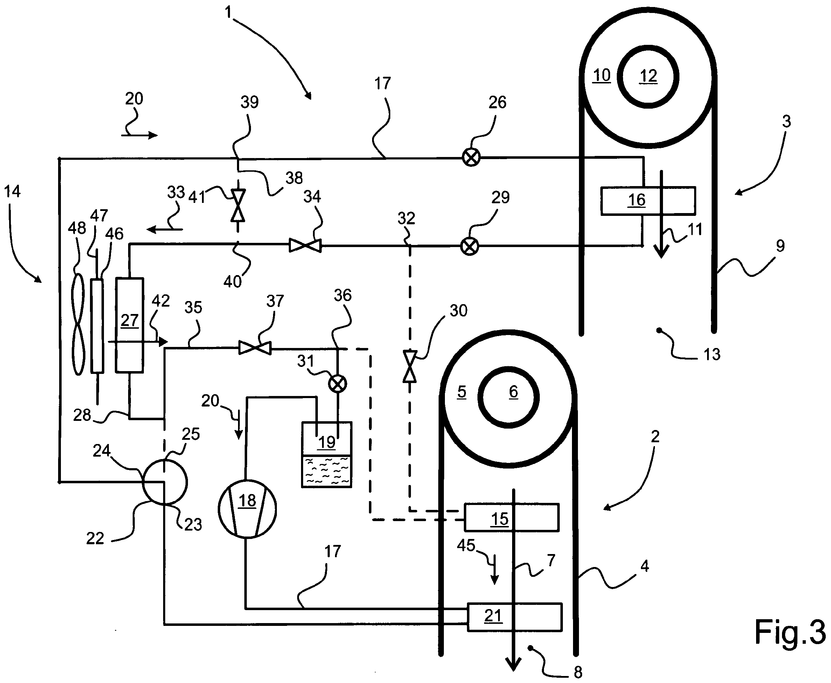

Sur la fig.3, la boucle de climatisation 14 est représentée en mode chauffage dans lequel le flux d'air principal 7 est réchauffé alors que le flux d'air secondaire 11 est soit réchauffé ou refroidi. Dans cette configuration, la vanne trois-voies 22 permet une circulation du fluide réfrigérant depuis l'entrée 23 vers la première sortie 24, l'électrovanne 34 est ouverte de telle sorte que le fluide réfrigérant circule depuis le point intermédiaire 32 vers le point d'attache 40, la vanne de passage 30 est fermée de telle sorte que le fluide réfrigérant ne circule pas depuis le point intermédiaire 32 jusqu'au point médian 36, la première vanne de dérivation 37 est ouverte de telle sorte que le fluide réfrigérant circule à l'intérieur de la première dérivation 35 et la deuxième vanne de dérivation 41 est fermée de manière à ce que le fluide réfrigérant ne circule pas à l'intérieur de la deuxième dérivation 38. Ces dispositions sont telles que le fluide réfrigérant circule depuis le compresseur 18 jusqu'au condenseur 21, puis circule à travers la vanne trois-voies 22 depuis l'entrée 23 jusqu'à la première sortie 24. Le fluide réfrigérant circule ensuite à travers le premier organe de détente 26 qui est ouvert ou partiellement fermé selon que l'échangeur secondaire 16 fonctionne en mode condenseur ou évaporateur. Le fluide réfrigérant circule alors jusqu'au deuxième organe de détente 29 où il subit une détente. Ensuite, le fluide réfrigérant circule à travers l'électrovanne 34 et emprunte la ligne secondaire 28 selon un sens de déplacement 33 du fluide réfrigérant qui est inverse au sens de déplacement 33 en mode climatisation. Le fluide réfrigérant circule alors à l'intérieur de l'échangeur de chaleur fluide réfrigérant / air ambiant 27 qui se comporte comme un évaporateur à l'intérieur duquel le fluide réfrigérant capte de la chaleur au flux d'air ambiant 42. Le fluide réfrigérant emprunte alors la première dérivation 35 en circulant à travers la première vanne de dérivation 37, pour rejoindre l'accumulateur 19 par l'intermédiaire du troisième organe de détente 31. Ce dernier est ouvert de telle sorte qu'aucune détente ne s'y produit. Enfin le fluide réfrigérant rejoint le compresseur 18. Ces dispositions sont telles que le flux d'air secondaire 11 est réchauffé ou refroidi lors de sa traversée de l'échangeur thermique secondaire 16 et le flux d'air principal 7 est réchauffé lors de sa traversée du condenseur 21. La mise en oeuvre en mode chauffage d'un tel système de climatisation consiste alors à :
- permettre une circulation du fluide réfrigérant à l'intérieur de la vanne trois-voies depuis l'entrée vers la première sortie et interdire une circulation du fluide réfrigérant à l'intérieur de la vanne trois-voies depuis l'entrée vers la deuxième sortie,
- ouvrir l'électrovanne,
- fermer la vanne de passage,
- ouvrir la première vanne de dérivation,
- fermer la deuxième vanne de dérivation,
- dans un premier cas interdire une détente du fluide réfrigérant à l'intérieur du premier organe de détente et l'échangeur thermique secondaire se comporte comme condenseur supplémentaire et l'air réchauffé est pulsé dans l'habitacle, dans un deuxième cas le premier organe de détente est partiellement fermé et l'échangeur thermique secondaire fonctionne en mode évaporateur et l'air refroidi est pulsé vers l'extérieur.
- permettre une détente du fluide réfrigérant à l'intérieur du deuxième organe de détente,
- interdire une détente du fluide réfrigérant à l'intérieur du troisième organe de détente.

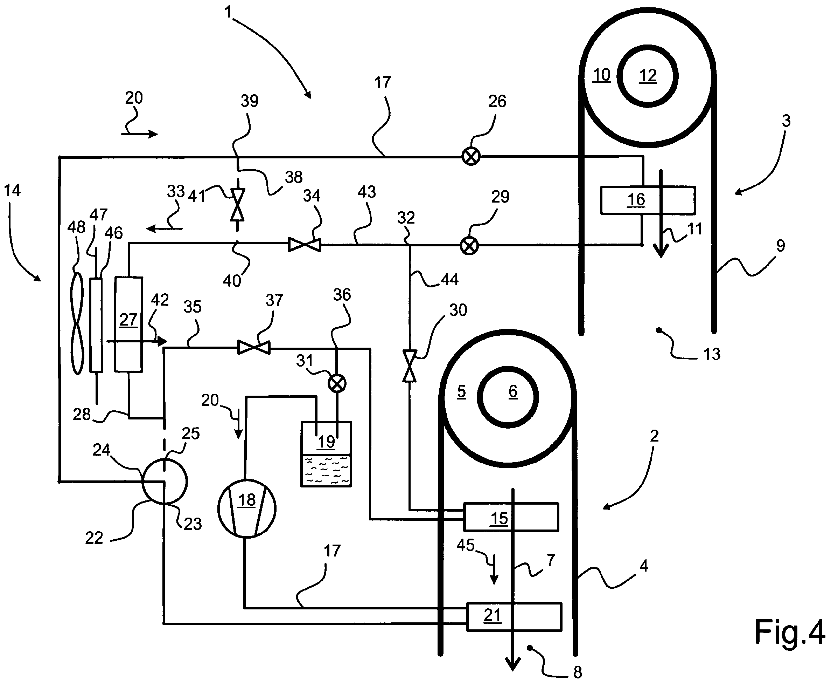

Sur la fig.4, la boucle de climatisation 14 est représentée en mode déshumidification dans lequel le flux d'air secondaire 11 est réchauffé ou refroidi et le flux d'air principal 7 est dans un premier temps refroidi, puis réchauffé préalablement à sa délivrance à l'intérieur de l'habitacle. Dans cette configuration, la vanne trois-voies 22 permet une circulation du fluide réfrigérant depuis l'entrée 23 vers la première sortie 24, l'électrovanne 34 est ouverte de telle sorte que le fluide réfrigérant circule depuis le point intermédiaire 32 vers le point d'attache 40, la vanne de passage 30 est ouverte de telle sorte que le fluide réfrigérant circule depuis le point intermédiaire 32 jusqu'au point médian 36, la première vanne de dérivation 37 est ouverte de telle sorte que le fluide réfrigérant circule à l'intérieur de la première dérivation 35 et la deuxième vanne de dérivation 41 est fermée de manière à ce que le fluide réfrigérant ne circule pas à l'intérieur de la deuxième dérivation 38. Ces dispositions sont telles que le fluide réfrigérant circule depuis le compresseur 18 jusqu'au condenseur 21, puis circule à travers la vanne trois-voies 22 depuis l'entrée 23 jusqu'à la première sortie 24. Le fluide réfrigérant circule ensuite à travers le premier organe de détente 26 qui est ouvert / partiellement fermé de telle sorte que le fluide réfrigérant y subit ou non une détente. Puis, le fluide réfrigérant circule à travers l'échangeur thermique secondaire 16 qui se comporte soit comme un condenseur soit comme un évaporateur en échangeant de la chaleur avec le flux d'air secondaire 11. Le fluide réfrigérant circule alors jusqu'au deuxième organe de détente 29 où il subit une détente totale ou partielle. Le fluide réfrigérant circule alors jusqu'au point intermédiaire 32 où le fluide réfrigérant se scinde en une première portion 43 qui emprunte la ligne secondaire 28 et une deuxième portion 44 qui s'écoule vers la vanne de passage 30. La première portion 43 de fluide réfrigérant circule à travers la ligne secondaire 28 par l'intermédiaire de l'électrovanne 34, puis de l'échangeur de chaleur fluide réfrigérant / air ambiant 27. Ce dernier se comporte comme un évaporateur à l'intérieur duquel le fluide réfrigérant capte de la chaleur au flux d'air ambiant 42. Puis, la première portion 43 de fluide réfrigérant circule à travers la première dérivation 35 en traversant la première vanne de dérivation 37 jusqu'au point médian 36. La deuxième portion 44 de fluide réfrigérant s'écoule à travers la vanne de passage 30, puis à travers l'échangeur thermique principal 15 à l'intérieur duquel la deuxième portion 44 capte de la chaleur au flux d'air principal 7. L'échangeur thermique principal 15 se comporte comme un évaporateur et est placé en amont du condenseur 21 selon un sens d'écoulement 45 du flux d'air principal 7 à l'intérieur du boîtier avant 4. Au point médian 36, la première portion 43 de fluide réfrigérant et la deuxième portion 44 de fluide réfrigérant se rejoignent pour s'écouler à travers le troisième organe de détente 31. Ce dernier est préférentiellement ouvert de telle sorte que le fluide réfrigérant n'y subit aucune détente mais est susceptible d'être fonctionnel pour ajuster la détente opérée par le deuxième organe de détente 29. Enfin, le fluide réfrigérant rejoint l'accumulateur 19 puis le compresseur 18. Ces dispositions sont telles que le flux d'air secondaire 11 est réchauffé ou refroidi lors de sa traversée de l'échangeur thermique secondaire 16 tandis que le flux d'air principal 7 est refroidi lors de sa traversée de l'échangeur thermique principal 15, puis réchauffé lors de sa traversée du condenseur 21. Il en découle une déshumidification du flux d'air principal 7 qui est alors avantageusement utilisé pour désembuer un pare-brise et/ou des vitres avant du véhicule. Une option serait aussi de fermer la vanne 34 et d'exclure l'échangeur 27 de ce mode, dans ce cas seuls les échangeurs 16 & 15 peuvent fonctionner comme des évaporateurs. La mise en oeuvre en mode déshumidification d'un tel système de climatisations consiste alors à :
- permettre une circulation du fluide réfrigérant à l'intérieur de la vanne trois-voies depuis l'entrée vers la première sortie et interdire une circulation du fluide réfrigérant à l'intérieur de la vanne trois-voies depuis l'entrée vers la deuxième sortie,
- ouvrir l'électrovanne,
- ouvrir la vanne de passage,
- ouvrir la première vanne de dérivation,
- fermer la deuxième vanne de dérivation,
- interdire / permettre une détente du fluide réfrigérant à l'intérieur du premier organe de détente,
- permettre une détente du fluide réfrigérant à l'intérieur du deuxième organe de détente,
- interdire une détente du fluide réfrigérant à l'intérieur du troisième organe de détente.

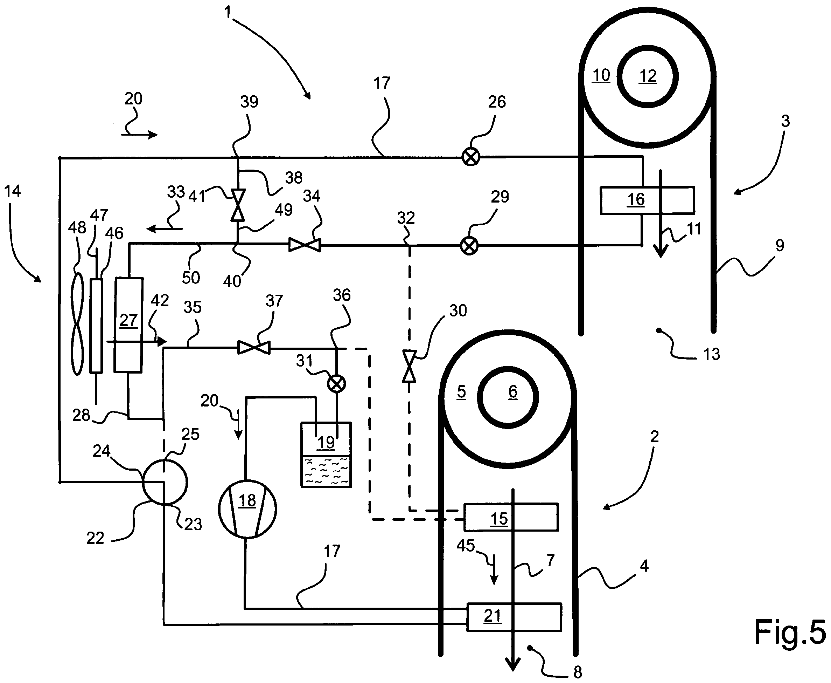

Sur la fig.5, la boucle de climatisation 14 est représentée en un premier mode dégivrage de l'échangeur de chaleur fluide réfrigérant / air ambiant 27 dans lequel le ventilateur 48 est mis en oeuvre pour permettre un transfert de chaleur entre le liquide caloporteur circulant à l'intérieur du radiateur 46 du circuit de refroidissement 47 en vue de permettre un dégivrage de l'échangeur de chaleur fluide réfrigérant / air ambiant 27. Ces dispositions permettent d'utiliser la boucle de climatisation 14 pour réchauffer le flux d'air principal 7 et le flux d'air secondaire 11 en minimisant l'utilisation de l'échangeur de chaleur fluide réfrigérant / air ambiant 27 comme évaporateur pour éviter un dépôt de givre important sur une surface externe de ce dernier. Cette faculté est obtenue à partir d'une faible compression du fluide réfrigérant par le compresseur 18 de telle sorte qu'une différence de pression du fluide réfrigérant en amont et en aval du compresseur est faible, typiquement de l'ordre du bar, tandis qu'un débit du fluide réfrigérant à l'intérieur de la boucle de climatisation est importante, typiquement de l'ordre 60-180 kg/h. Dans cette configuration, la vanne trois-voies 22 permet une circulation du fluide réfrigérant depuis l'entrée 23 vers la première sortie 24, l'électrovanne 34 est ouverte de telle sorte que le fluide réfrigérant circule depuis le point intermédiaire 32 vers le point d'attache 40, la vanne de passage 30 est fermée, de telle sorte que le fluide réfrigérant ne circule pas depuis le point intermédiaire 32 jusqu'au point médian 36, la première vanne de dérivation 37 est ouverte, de telle sorte que le fluide réfrigérant circule à l'intérieur de la première dérivation 35 et la deuxième vanne de dérivation 41 est ouverte de manière à ce que le fluide réfrigérant circule à l'intérieur de la deuxième dérivation 38. Ces dispositions sont telles que le fluide réfrigérant circule depuis le compresseur 18 jusqu'au condenseur 21, puis circule à travers la vanne trois-voies 22 depuis l'entrée 23 jusqu'à la première sortie 24. Le fluide réfrigérant circule ensuite à travers le premier organe de détente 26 qui est ouvert de telle sorte que le fluide réfrigérant n'y subit aucune détente. Puis, le fluide réfrigérant circule à travers l'échangeur thermique secondaire 16 qui se comporte comme un évaporateur en en échangeant de la chaleur avec un flux d'air secondaire 11. Le fluide réfrigérant circule alors jusqu'au deuxième organe de détente 29 qui est ouvert de telle sorte que le fluide réfrigérant n'y subit aucune détente. Le fluide réfrigérant circule alors jusqu'au point intermédiaire 32 et emprunte la ligne secondaire 28 en circulant à l'intérieur de l'électrovanne 34 jusqu'au point d'attache 40. Au point d'attache 40, le fluide réfrigérant se scinde en deux fractions, dont une première fraction 49 qui emprunte la deuxième dérivation 38 et une deuxième fraction 50 qui s'écoule vers l'échangeur de chaleur fluide réfrigérant / air ambiant 27. La première fraction 49 circule depuis le point d'attache 40 jusqu'au point de liaison 39. La deuxième fraction 50 circule à travers l'échangeur de chaleur fluide réfrigérant / air ambiant 27, puis emprunte la première dérivation 35 en circulant à travers la première vanne de dérivation 37. Le troisième organe de détente 31 est ouvert de telle sorte que la deuxième fraction 50 n'y subit aucune détente. Puis la deuxième fraction retourne à l'accumulateur 19, puis au compresseur 18. Ces dispositions sont telles que le flux d'air secondaire 11 est réchauffé lors de sa traversée de l'échangeur thermique arrière 16 tandis que le flux d'air principal 7 est réchauffé lors de sa traversée du condenseur 21. Il en découle une optimisation du confort thermique à l'intérieur de l'habitacle du véhicule, le dégivrage de l'échangeur de chaleur fluide réfrigérant / air ambiant 27 étant assuré conjointement par le radiateur 46 et le fluide réfrigérant circulant à l'intérieur de l'échangeur de chaleur fluide réfrigérant / air ambiant 27. La mise en oeuvre en un mode dégivrage d'un tel système de climatisation consiste alors à :
- permettre une circulation du fluide réfrigérant à l'intérieur de la vanne trois-voies depuis l'entrée vers la première sortie et interdire une circulation du fluide réfrigérant à l'intérieur de la vanne trois-voies depuis l'entrée vers la deuxième sortie,
- ouvrir l'électrovanne,
- fermer la vanne de passage,
- ouvrir la première vanne de dérivation,
- ouvrir la deuxième vanne de dérivation,
- interdire une détente du fluide réfrigérant à l'intérieur du premier organe de détente,
- interdire une détente du fluide réfrigérant à l'intérieur du deuxième organe de détente,
- interdire une détente du fluide réfrigérant à l'intérieur du troisième organe de détente,
- mettre en oeuvre le ventilateur.

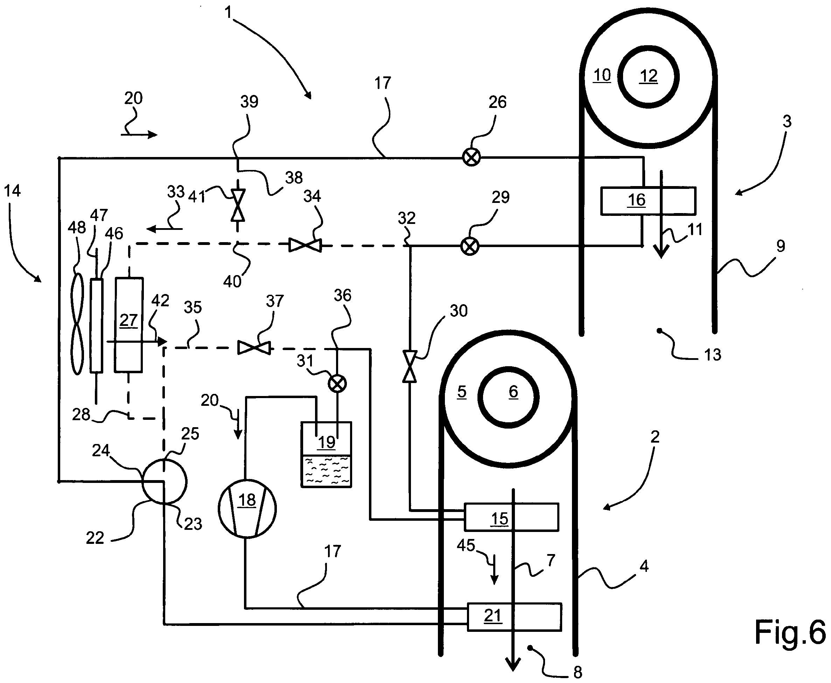

Sur la fig.6, la boucle de climatisation 14 est représentée en un mode de chauffage avec l'échangeur de chaleur fluide réfrigérant / air ambiant 27 givré. L'échangeur 27 est mis hors circuit. Ces dispositions permettent d'utiliser la boucle de climatisation 14 pour préchauffer le flux d'air principal 7 et le flux d'air secondaire 11 est refroidi. L'échangeur 16 est utilisé comme un évaporateur sans utiliser l'échangeur de chaleur fluide réfrigérant / air ambiant 27 comme évaporateur. Cette faculté est obtenue à partir d'une utilisation du troisième organe de détente 31 pour la détente du fluide réfrigérant. Dans cette configuration, la vanne trois-voies 22 permet une circulation du fluide réfrigérant depuis l'entrée 23 vers la première sortie 24, l'électrovanne 34 est fermée de telle sorte que le fluide réfrigérant ne circule pas entre le point intermédiaire 32 et le point d'attache 40, ni à travers l'échangeur de chaleur fluide réfrigérant / air ambiant 27, la vanne de passage 30 est ouverte, de telle sorte que le fluide réfrigérant circule depuis le point intermédiaire 32 jusqu'au point médian 36, la première vanne de dérivation 37 est fermée, de telle sorte que le fluide réfrigérant ne circule pas à l'intérieur de la première dérivation 35 et la deuxième vanne de dérivation 41 est fermée de manière à ce que le fluide réfrigérant ne circule pas à l'intérieur de la deuxième dérivation 38. Ces dispositions sont telles que le fluide réfrigérant circule depuis le compresseur 18 jusqu'au condenseur 21, puis circule à travers la vanne trois-voies 22 depuis l'entrée 23 jusqu'à la première sortie 24. Le fluide réfrigérant circule ensuite à travers le premier organe de détente 26 où il subit une première détente. Puis, le fluide réfrigérant circule à travers l'échangeur thermique secondaire 16 qui se comporte comme évaporateur en échangeant de la chaleur avec le flux d'air secondaire 11. Le fluide réfrigérant circule alors jusqu'au deuxième organe de détente 29 qui est partiellement fermé pour générer une deuxième détente. Le fluide réfrigérant circule alors jusqu'au point intermédiaire 32, puis circule à l'intérieur de la vanne de passage 30. Le fluide réfrigérant circule alors à l'intérieur de l'échangeur thermique principal 15 qui se comporte comme un condenseur/évaporateur qui fonctionne à une température proche de la température ambiante. La mise en oeuvre en un mode chauffage d'un tel système de climatisation permettant de fonctionner sans mettre en oeuvre l'échangeur givré de la face avant et consiste préférentiellement à :
- permettre une circulation du fluide réfrigérant à l'intérieur de la vanne trois-voies depuis l'entrée vers la première sortie et interdire une circulation du fluide réfrigérant à l'intérieur de la vanne trois-voies depuis l'entrée vers la deuxième sortie,
- fermer l'électrovanne,
- ouvrir la vanne de passage,
- fermer la première vanne de dérivation,
- fermer la deuxième vanne de dérivation,
- permettre une détente du fluide réfrigérant à l'intérieur du premier organe de détente,
- interdire une détente du fluide réfrigérant à l'intérieur du deuxième organe de détente,
- permettre une détente du fluide réfrigérant à l'intérieur du troisième organe de détente
- mettre en oeuvre le ventilateur.

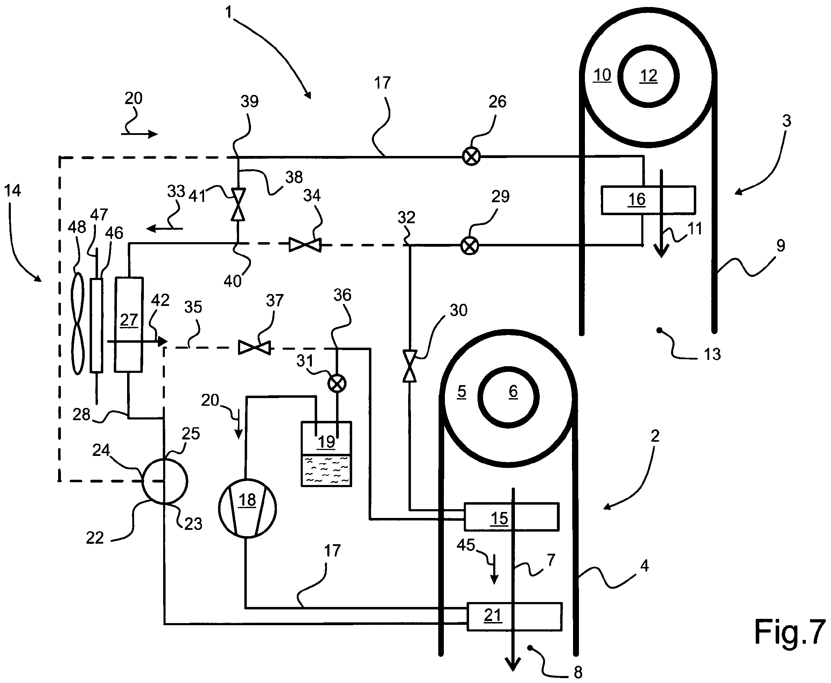

Sur la fig.7, la boucle de climatisation 14 est représentée en un deuxième mode de dégivrage de l'échangeur de chaleur fluide réfrigérant / air ambiant 27. Dans cette configuration, la vanne trois-voies 22 permet une circulation du fluide réfrigérant depuis l'entrée 23 vers la deuxième sortie 25, l'électrovanne 34 est fermée de telle sorte que le fluide réfrigérant ne circule pas depuis le point d'attache 40 jusqu'au point intermédiaire 32, la vanne de passage 30 est ouverte de telle sorte que le fluide réfrigérant circule depuis le point intermédiaire 32 jusqu'au point médian 36, la première vanne de dérivation 37 est fermée, de telle sorte que le fluide réfrigérant ne circule pas à l'intérieur de la première dérivation 35 et la deuxième vanne de dérivation 41 est ouverte, de manière à ce que le fluide réfrigérant circule à l'intérieur de la deuxième dérivation 38. Ces dispositions sont telles que le fluide réfrigérant circule depuis le compresseur 18 jusqu'au condenseur 21, puis circule à travers la vanne trois-voies 22 depuis l'entrée 23 jusqu'à la deuxième sortie 25, puis circule à travers l'échangeur de chaleur fluide réfrigérant / air ambiant 27 qui se comporte comme un condenseur pour permettre notamment un dégivrage dudit échangeur de chaleur 27. Le fluide réfrigérant circule ensuite jusqu'au point d'attache 40 pour emprunter la deuxième dérivation 38 puis retrouver la ligne principale 17. Le fluide réfrigérant circule ensuite à travers le premier organe de détente 26 à l'intérieur duquel le fluide réfrigérant subit une première détente. Puis, le fluide réfrigérant circule à travers l'échangeur thermique secondaire 16 qui se comporte comme un évaporateur en captant de la chaleur au flux d'air secondaire 11. Le fluide réfrigérant circule alors jusqu'au deuxième organe de détente 29 où il subit une deuxième détente. Ensuite, le fluide réfrigérant circule à travers la vanne de passage 30 pour rejoindre l'échangeur thermique principal 15 qui refroidit le flux d'air principal 7 le traversant. A nouveau, l'échange de chaleur entre le fluide réfrigérant et le flux d'air principal 7 est faible, les températures respectives de ces derniers étant proches l'une de l'autre. La mise en oeuvre en un deuxième mode dégivrage d'un tel système de climatisation consiste alors à :
- interdire une circulation du fluide réfrigérant à l'intérieur de la vanne trois-voies depuis l'entrée vers la première sortie et permettre une circulation du fluide réfrigérant à l'intérieur de la vanne trois-voies depuis l'entrée vers la deuxième sortie,
- fermer l'électrovanne,
- ouvrir la vanne de passage,
- fermer la première vanne de dérivation
- ouvrir la deuxième vanne de dérivation,
- permettre une détente du fluide réfrigérant à l'intérieur du premier organe de détente,
- permettre une détente du fluide réfrigérant à l'intérieur du deuxième organe de détente,
- permettre une détente du fluide réfrigérant à l'intérieur du troisième organe (s'il existe) de détente.

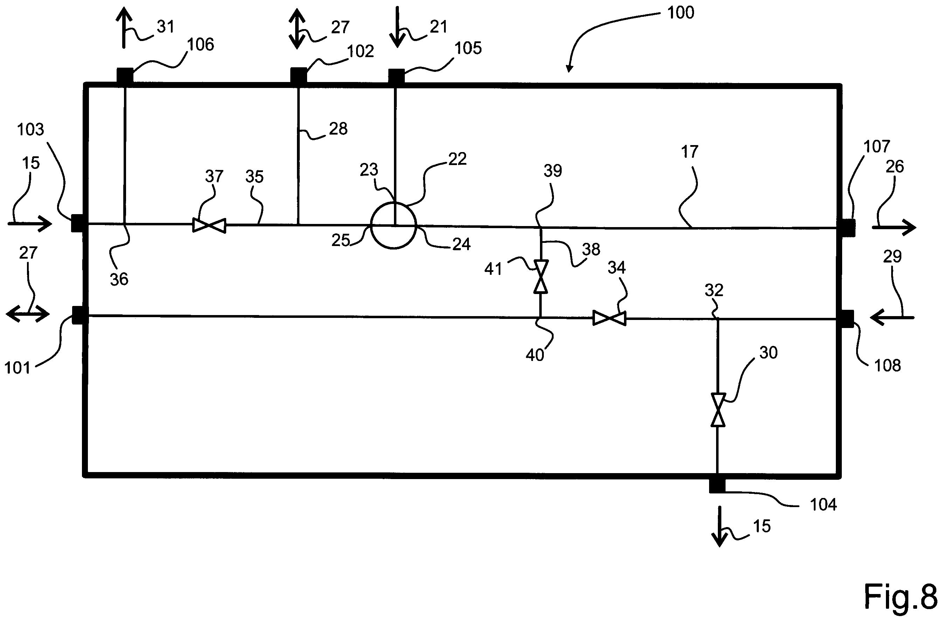

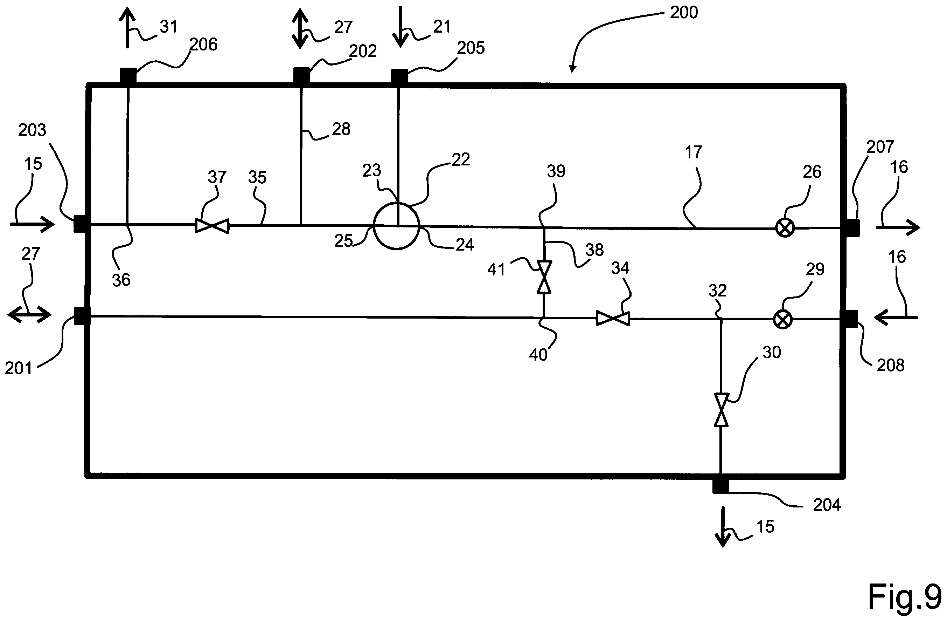

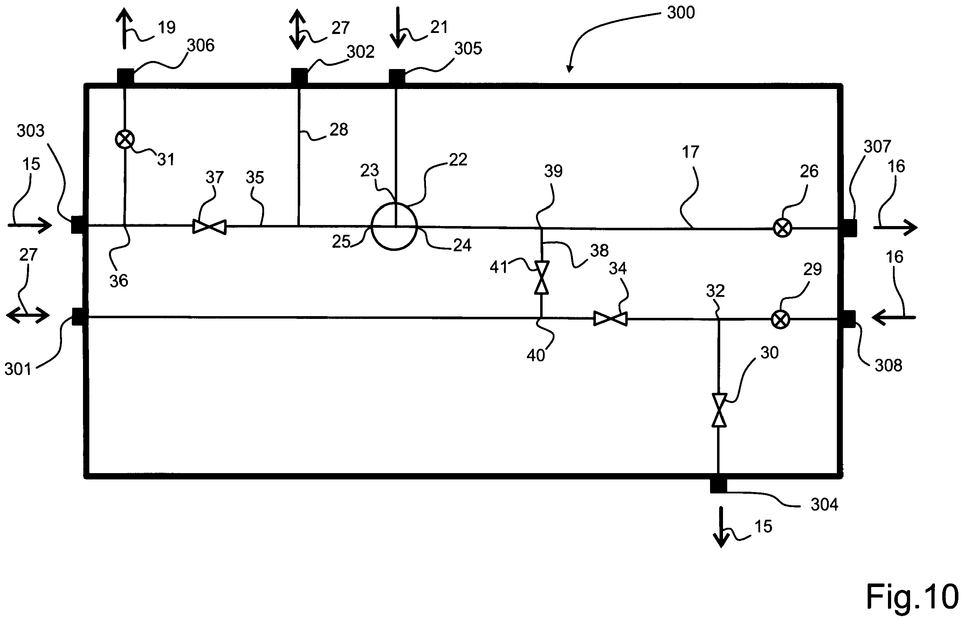

Pour faciliter la mise en oeuvre de la boucle de climatisation 14, la présente invention propose de regrouper à l'intérieur d'un bloc de distribution 100, 200,300 des éléments constitutifs de la boucle de climatisation 14. Sur la fig.8, un bloc de distribution de premier type 100 comprend la vanne trois-voies 22, l'électrovanne 34, la vanne de passage 30, la première vanne de dérivation 37 et la deuxième vanne de dérivation 41. Sur la fig.9, un bloc de distribution de deuxième type 200 comprend la vanne trois-voies 22, l'électrovanne 34, la vanne de passage 30, la première vanne de dérivation 37, la deuxième vanne de dérivation 41, le premier organe de détente 26 et le deuxième organe de détente 29. Sur la fig.10, un bloc de distribution de troisième type 300 comprend la vanne trois-voies 22, l'électrovanne 34, la vanne de passage 30, la première vanne de dérivation 37, la deuxième vanne de dérivation 41, le premier organe de détente 26, le deuxième organe de détente 29 et le troisième organe de détente 31. Le bloc de distribution 100, 200,300 est destiné à gérer la circulation du fluide réfrigérant entre les différents échangeurs 15, 16,27 que comporte la boucle de climatisation 14 ainsi que le condenseur 21, le compresseur 18 et l'accumulateur 19. Le bloc de distribution de deuxième type 200 et le bloc de distribution de troisième type 300 présentent également l'avantage particulier de comporter au moins le premier organe de détente 26 et le deuxième organe de détente 29, pour finalement minimiser des pertes de charge que subit le fluide réfrigérant au cours de sa circulation à l'intérieur de la boucle de climatisation 14.

Le bloc de distribution 100,200,300 comporte une première entrée/sortie 101,201,301 de fluide réfrigérant qui est prévue pour être mise en communication fluidique avec une arrivée/départ de fluide réfrigérant que comprend l'échangeur de chaleur fluide réfrigérant / air ambiant 27. La première entrée/sortie 101, 201,301 est interposée entre le point d'attache 40 et l'arrivée/départ de l'échangeur de chaleur fluide réfrigérant / air ambiant 27.

Le bloc de distribution 100,200,300 comporte également une deuxième entrée/sortie 102,202,302 de fluide réfrigérant qui est prévue pour être mise en communication fluidique avec l'autre arrivée/départ de fluide réfrigérant que comprend l'échangeur de chaleur fluide réfrigérant / air ambiant 27. La deuxième entrée/sortie 102, 202,302 est interposée entre la deuxième sortie 25 de la vanne trois-voies 22 et l'autre arrivée/départ de l'échangeur de chaleur fluide réfrigérant / air ambiant 27.

Le bloc de distribution 100,200,300 comporte encore une première admission 103,203,303 de fluide réfrigérant qui est prévue pour être mise en communication fluidique avec une sortie de fluide réfrigérant que comprend l'échangeur thermique principal 15. La première admission 103, 203,303 est interposée entre le point médian 36 et la sortie de l'échangeur thermique principal 15.

Le bloc de distribution 100,200,300 comporte également une première évacuation 104,204,304 de fluide réfrigérant qui est prévue pour être mise en communication fluidique avec une entrée de fluide réfrigérant que comprend l'échangeur thermique avant 15. La première évacuation 104, 204,304 est interposée entre la vanne de passage 30 et l'entrée de l'échangeur thermique principal15.

Le bloc de distribution 100,200,300 comporte encore une deuxième admission 105,205,305 de fluide réfrigérant qui est prévue pour être mise en communication fluidique avec une évacuation de fluide réfrigérant que comprend le condenseur 21. La deuxième admission 105, 205,305 est interposée entre la première sortie 23 de la vanne trois-voies 22 et l'évacuation du condenseur 21.

Le bloc de distribution 100, 200,300 comporte également une deuxième évacuation 106, 206,306 de fluide réfrigérant. La deuxième évacuation 106 du bloc de distribution 100 de premier type et la deuxième évacuation 206 du bloc de distribution 200 de deuxième type sont prévues pour être mise en relation fluidique avec le troisième organe de détente 31. La deuxième évacuation 106 du bloc de distribution 100 de premier type et la deuxième évacuation 206 du bloc de distribution 200 de deuxième type sont interposées entre le troisième organe de détente 31 et le point médian 36. La deuxième évacuation 306 du bloc de distribution 300 de troisième type est prévue pour être mise en relation fluidique avec une arrivée du fluide réfrigérant à l'intérieur de l'accumulateur 19. La deuxième évacuation 306 du bloc de distribution 300 de troisième type est interposée entre l'arrivée du fluide réfrigérant à l'intérieur de l'accumulateur 19 et le point médian 36.

Le bloc de distribution 100, 200,300 comporte également une troisième évacuation 107, 207,307 de fluide réfrigérant. La troisième évacuation 107 du bloc de distribution 100 de premier type est prévue pour être mise en relation fluidique avec le premier organe de détente 26. La troisième évacuation 107 du bloc de distribution 100 de premier type est interposée entre le point de liaison 39 et le premier organe de détente 26. La troisième évacuation 207 du bloc de distribution 200 de deuxième type et la troisième évacuation 307 du bloc de distribution 300 de troisième type sont prévues pour être mises en relation fluidique avec une arrivée de fluide réfrigérant à l'intérieur de l'échangeur thermique arrière 16. La troisième évacuation 207 du bloc de distribution 200 de deuxième type et la troisième évacuation 307 du bloc de distribution 300 de troisième type sont interposées entre le premier organe de détente 26 et l'arrivée de fluide réfrigérant à l'intérieur de l'échangeur thermique secondaire 16.

Le bloc de distribution 100, 200,300 comporte également une troisième admission 107, 207,307 de fluide réfrigérant. La troisième admission 107 du bloc de distribution 100 de premier type est prévue pour être mise en relation fluidique avec le deuxième organe de détente 29. La troisième admission 107 du bloc de distribution 100 de premier type est interposée entre le point de liaison 39 et le deuxième organe de détente 29. La troisième admission 207 du bloc de distribution 200 de deuxième type et la troisième admission 307 du bloc de distribution 300 de troisième type sont prévues pour être mises en relation fluidique avec une arrivée de fluide réfrigérant à l'intérieur de l'échangeur thermique arrière 16. La troisième admission 207 du bloc de distribution 200 de deuxième type et la troisième admission 307 du bloc de distribution 300 de troisième type sont interposées entre le deuxième organe de détente 29 et l'arrivée de fluide réfrigérant à l'intérieur de l'échangeur thermique secondaire16.

## Revendications

1. Boucle de climatisation (14) à l'intérieur de laquelle circule un fluide réfrigérant, la boucle de climatisation (14) comprenant un échangeur thermique principal (15), un échangeur thermique secondaire (16) et au moins deux organes de détente (26,29), dont un premier organe de détente (26) et un deuxième organe de détente (29), l'échangeur thermique secondaire (16) étant interposé sur la boucle de climatisation (14) directement entre les deux organes de détente (26,29), et **caractérisée en ce que** la boucle de climatisation (14) comprend une ligne principale (17) qui comporte successivement dans un sens de circulation (20) du fluide réfrigérant à l'intérieur de la ligne principale (17) : un compresseur (18), un condenseur (21), une vanne trois-voies (22), le premier organe de détente (26), l'échangeur thermique secondaire (16), le deuxième organe de détente (29), une vanne de passage (30), l'échangeur thermique principal (15) et un accumulateur (19), et **en ce que** la boucle de climatisation comprend une ligne secondaire (28) qui est ménagée entre la vanne trois-voies et un point intermédiaire (32) de la ligne principale (17), le point intermédiaire (32) étant placé entre le deuxième organe de détente (29) et la vanne de passage (30).

2. Boucle de climatisation (14) selon la revendication 1, **caractérisée en ce que** la boucle de climatisation (14) comprend un troisième organe de détente (31) qui est interposé sur la ligne principale (17) entre l'accumulateur (19) et l'échangeur thermique principal (15).

3. Boucle de climatisation (14) selon l'une quelconque des revendications précédentes, **caractérisée en ce que** la ligne secondaire (28) comporte selon un sens de déplacement (33) du fluide réfrigérant à l'intérieur de la ligne secondaire (28) : un échangeur de chaleur fluide réfrigérant / air ambiant (27) et une électrovanne (34).

4. Boucle de climatisation (14) selon l'une quelconque des revendications précédentes , **caractérisée en ce que** la boucle de climatisation (14) comprend une première dérivation (35) qui est ménagée entre la vanne trois-voies (22) et un point médian (36) de la ligne principale (17).

5. Boucle de climatisation (14) selon la revendication 4, **caractérisée en ce que** le point médian (36) est situé entre l'échangeur thermique principal (15) et l'accumulateur (19).

6. Boucle de climatisation (14) selon les revendications 2 et 4, **caractérisée en ce que** le point médian (36) est situé entre l'échangeur thermique principal (15) et le troisième organe de détente (31).

7. Boucle de climatisation (14) selon l'une quelconque des revendications 4 à 6, **caractérisée en ce que** la première dérivation (35) est pourvue d'une première vanne de dérivation (37).

8. Boucle de climatisation (14) selon l'une quelconque des revendications précédentes, **caractérisée en ce que** la boucle de climatisation (14) comprend une deuxième dérivation (38) qui est ménagée entre un point d'attache (40) de la ligne secondaire (28) et un point de liaison (39) de la ligne principale (17), le point d'attache (40) étant situé entre l'échangeur de chaleur fluide réfrigérant / air ambiant (27) et l'électrovanne (34), le point de liaison (39) étant situé entre une première sortie (24) de la vanne trois-voies (22) et le premier organe de détente (26).

9. Boucle de climatisation (14) selon la revendication 8, **caractérisée en ce que** la deuxième dérivation (38) est pourvue d'une deuxième vanne de dérivation (41).

10. Boucle de climatisation (14) selon les revendications 1, 3, 7 et 9, **caractérisée en ce qu'**au moins la vanne trois-voies (22), l'électrovanne (34), la vanne de passage (30), la première vanne de dérivation (37) et la deuxième vanne de dérivation (41) sont regroupées à l'intérieur d'un bloc de distribution (100, 200,300).

11. Boucle de climatisation (14) selon la revendication 10, **caractérisée en ce que** le bloc de distribution (200,300) comprend le premier organe de détente (26) et le deuxième organe de détente (29).

12. Boucle de climatisation (14) selon les revendications 2 et 11, **caractérisée en ce que** le bloc de distribution (300) comprend le troisième organe de détente (31).

13. Système de climatisation (1) comprenant une boucle de climatisation (14) selon l'une quelconque des revendications précédentes, **caractérisé en ce que** le système de climatisation (1) comprend une installation avant (2) de ventilation, de chauffage et/ou de climatisation qui loge l'échangeur thermique avant (15), le système de climatisation (1) comprenant une installation arrière (3) de ventilation, de chauffage et/ou de climatisation qui loge l'échangeur thermique arrière (16).

14. Système de climatisation (1) selon la revendication 13 comprenant une boucle de climatisation (14) selon l'une quelconque des revendications 1 à 12, **caractérisé en ce que** l'installation avant (2) de ventilation, de chauffage et/ou de climatisation loge le condenseur (21) qui est placé en aval de l'échangeur thermique principal (15) selon un sens d'écoulement (45) d'un flux d'air principal (7) à l'intérieur de l'installation avant (2) de ventilation, de chauffage et/ou de climatisation.

15. Système de climatisation (1) selon l'une quelconque des revendications 13 et 14 comprenant une boucle de climatisation (14) selon l'une quelconque des revendications 3 à 12, **caractérisé en ce que** le système de climatisation (1) comprend un ventilateur (48) et un radiateur (47) qui est constitutif d'un circuit de refroidissement (47) d'un moteur du véhicule, le radiateur (47) étant interposé entre le ventilateur (48) et l'échangeur de chaleur fluide réfrigérant / air ambiant (27).

## Patentansprüche

1. Klimatisierungskreislauf (14), in dem ein Kühlmittel zirkuliert, wobei der Klimatisierungskreislauf (14) einen Hauptwärmetauscher (15), einen Sekundärwärmetauscher (16) und mindestens zwei Expansionsorgane (26, 29) enthält, darunter ein erstes Expansionsorgan (26) und ein zweites Expansionsorgan (29), wobei der Sekundärwärmetauscher (16) im Klimatisierungskreislauf (14) direkt zwischen die zwei Expansionsorgane (26, 29) eingefügt ist, und **dadurch gekennzeichnet, dass** der Klimatisierungskreislauf (14) eine Hauptleitung (17) enthält, die nacheinander in einer Zirkulationsrichtung (20) des Kühlmittels innerhalb der Hauptleitung (17) aufweist: einen Kompressor (18), einen Verflüssiger (21), ein Dreiwegeventil (22), das erste Expansionsorgan (26), den Sekundärwärmetauscher (16), das zweite Expansionsorgan (29), ein Durchgangsventil (30), den Hauptwärmetauscher (15) und einen Akkumulator (19), und dass der Klimatisierungskreislauf eine Sekundärleitung (28) enthält, die zwischen dem Dreiwegeventil und einem Zwischenpunkt (32) der Hauptleitung (17) eingerichtet ist, wobei der Zwischenpunkt (32) zwischen dem zweiten Expansionsorgan (29) und dem Durchgangsventil (30) angeordnet ist.

2. Klimatisierungskreislauf (14) nach Anspruch 1, **dadurch gekennzeichnet, dass** der Klimatisierungskreislauf (14) ein drittes Expansionsorgan (31) enthält, das auf der Hauptleitung (17) zwischen den Akkumulator (19) und den Hauptwärmetauscher (15) eingefügt ist.

3. Klimatisierungskreislauf (14) nach einem der vorhergehenden Ansprüche, **dadurch gekennzeichnet, dass** die Sekundärleitung (28) gemäß einer Bewegungsrichtung (33) des Kühlmittels im Inneren der Sekundärleitung (28) aufweist: einen Kühlmittel / Umgebungsluft-Wärmetauscher (27) und ein Elektroventil (34).

4. Klimatisierungskreislauf (14) nach einem der vorhergehenden Ansprüche, **dadurch gekennzeichnet, dass** der Klimatisierungskreislauf (14) eine erste Abzweigung (35) enthält, die zwischen dem Dreiwegeventil (22) und einem Mittelpunkt (36) der Hauptleitung (17) eingerichtet ist.

5. Klimatisierungskreislauf (14) nach Anspruch 4, **dadurch gekennzeichnet, dass** der Mittelpunkt (36) sich zwischen dem Hauptwärmetauscher (15) und dem Akkumulator (19) befindet.

6. Klimatisierungskreislauf (14) nach den Ansprüchen 2 und 4, **dadurch gekennzeichnet, dass** der Mittelpunkt (36) sich zwischen dem Hauptwärmetauscher (15) und dem dritten Expansionsorgan (31) befindet.

7. Klimatisierungskreislauf (14) nach einem der Ansprüche 4 bis 6, **dadurch gekennzeichnet, dass** die erste Abzweigung (35) mit einem ersten Abzweigventil (37) versehen ist.

8. Klimatisierungskreislauf (14) nach einem der vorhergehenden Ansprüche, **dadurch gekennzeichnet, dass** der Klimatisierungskreislauf (14) eine zweite Abzweigung (38) enthält, die zwischen einem Befestigungspunkt (40) der Sekundärleitung (28) und einem Verbindungspunkt (39) der Hauptleitung (17) eingerichtet ist, wobei der Befestigungspunkt (40) sich zwischen dem Kühlmittel / Umgebungsluft-Wärmetauscher (27) und dem Elektroventil (34) befindet, wobei der Verbindungspunkt (39) sich zwischen einem ersten Ausgang (24) des Dreiwegeventils (22) und dem ersten Expansionsorgan (26) befindet.

9. Klimatisierungskreislauf (14) nach Anspruch 8, **dadurch gekennzeichnet, dass** die zweite Abzweigung (38) mit einem zweiten Abzweigventil (41) versehen ist.

10. Klimatisierungskreislauf (14) nach den Ansprüchen 1, 3, 7 und 9, **dadurch gekennzeichnet, dass** mindestens das Dreiwegeventil (22), das Elektroventil (34), das Durchgangsventil (30), das erste Abzweigventil (37) und das zweite Abzweigventil (41) im Inneren eines Verteilerblocks (100, 200, 300) zusammengefasst sind.

11. Klimatisierungskreislauf (14) nach Anspruch 10, **dadurch gekennzeichnet, dass** der Verteilerblock (200, 300) das erste Expansionsorgan (26) und das zweite Expansionsorgan (29) enthält.

12. Klimatisierungskreislauf (14) nach den Ansprüchen 2 und 11, **dadurch gekennzeichnet, dass** der Verteilerblock (300) das dritte Expansionsorgan (31) enthält.

13. Klimaanlage (1), die einen Klimatisierungskreislauf (14) nach einem der vorhergehenden Ansprüche enthält, **dadurch gekennzeichnet, dass** die Klimaanlage (1) eine vordere Einrichtung (2) zur Belüftung, Heizung und/oder Klimatisierung enthält, in der der vordere Wärmetauscher (15) untergebracht ist, wobei die Klimaanlage (1) eine hintere Einrichtung (3) zur Belüftung, Heizung und/oder Klimatisierung enthält, in der der hintere Wärmetauscher (16) untergebracht ist.

14. Klimaanlage (1) nach Anspruch 13, die einen Klimatisierungskreislauf (14) nach einem der Ansprüche 1 bis 12 enthält, **dadurch gekennzeichnet, dass** in der vorderen Einrichtung (2) zur Belüftung, Heizung und/oder Klimatisierung der Verflüssiger (21) untergebracht ist, der stromabwärts hinter dem Hauptwärmetauscher (15) gemäß einer Fließrichtung (45) eines Hauptluftstroms (7) im Inneren der vorderen Einrichtung (2) zur Belüftung, Heizung und/oder Klimatisierung angeordnet ist.

15. Klimaanlage (1) nach einem der Ansprüche 13 und 14, die einen Klimatisierungskreislauf (14) nach einem der Ansprüche 3 bis 12 enthält, **dadurch gekennzeichnet, dass** die Klimaanlage (1) einen Ventilator (48) und einen Kühler (47) enthält, der Bestandteil eines Kühlkreislaufs (47) eines Motors des Fahrzeugs ist, wobei der Kühler (47) zwischen den Ventilator (48) und den Kühlmittel / Umgebungsluft-Wärmetauscher (27) eingefügt ist.

## Claims

1. Air-conditioning loop (14) in which a coolant flows, the air-conditioning loop (14) comprising a main heat exchanger (15), a secondary heat exchanger (16) and at least two expansion members (26, 29), including a first expansion member (26) and a second expansion member (29), the secondary heat exchanger (16) being positioned in the air-conditioning loop (14) directly between the two expansion members (26, 29), and **characterized in that** the air-conditioning loop (14) comprises a main line (17) which includes in succession, in a direction of flow (20) of the coolant in the main line (17), a compressor (18), a condenser (21), a three-way valve (22), the first expansion member (26), the secondary heat exchanger (16), the second expansion member (29), a straight-through valve (30), the main heat exchanger (15), and an accumulator (19), and **in that** the air-conditioning loop comprises a secondary line (28) which is arranged between the three-way valve and an intermediate point (32) of the main line (17), the intermediate point (32) being positioned between the second expansion member (29) and the straight-through valve (30).

2. Air-conditioning loop (14) according to Claim 2, **characterized in that** the air-conditioning loop (14) comprises a third expansion member (31) which is positioned in the main line (17) between the accumulator (19) and the main heat exchanger (15).

3. Air-conditioning loop (14) according to either of the preceding claims, **characterized in that** the secondary line (28) includes, in a direction of movement (33) of the coolant in the secondary line (28), a coolant/ambient air heat exchanger (27) and a solenoid valve (34).

4. Air-conditioning loop (14) according to any of the preceding claims, **characterized in that** the air-conditioning loop (14) comprises a first branch (35) which is arranged between the three-way valve (22) and a mid-point (36) of the main line (17).

5. Air-conditioning loop (14) according to Claim 4, **characterized in that** the mid-point (36) is located between the main heat exchanger (15) and the accumulator (19).

6. Air-conditioning loop (14) according to Claims 2 and 4, **characterized in that** the mid-point (36) is located between the main heat exchanger (15) and the third expansion member (31).

7. Air-conditioning loop (14) according to any of Claims 4 to 6, **characterized in that** the first branch (35) is provided with a first branch valve (37).

8. Air-conditioning loop (14) according to any of the preceding claims, **characterized in that** the air-conditioning loop (14) comprises a second branch (38) which is arranged between a connection point (40) of the secondary line (28) and a linking point (39) of the main line (17), the connection point (40) being located between the coolant/ambient air heat exchanger (27) and the solenoid valve (34), the linking point (39) being located between a first outlet (24) of the three-way valve (22) and the first expansion member (26).

9. Air-conditioning loop (14) according to Claim 8, **characterized in that** the second branch (38) is provided with a second branch valve (41).

10. Air-conditioning loop (14) according to Claims 1, 3, 7 and 9, **characterized in that** at least the three-way valve (22), the solenoid valve (34), the straight-through valve (30), the first branch valve (37) and the second branch valve (41) are grouped within a distribution unit (100, 200, 300).

11. Air-conditioning loop (14) according to Claim 10, **characterized in that** the distribution unit (200, 300) comprises the first expansion member (26) and the second expansion member (29).

12. Air-conditioning loop (14) according to Claims 2 and 11, **characterized in that** the distribution unit (300) comprises the third expansion member (31).

13. Air-conditioning system (1) comprising an air-conditioning loop (14) according to any of the preceding claims, **characterized in that** the air-conditioning system (1) comprises a front ventilation, heating and/or air-conditioning installation (2) which houses the front heat exchanger (15), the air-conditioning system (1) comprising a rear ventilation, heating and/or air-conditioning installation (3) which houses the rear heat exchanger (16).

14. Air-conditioning system (1) according to Claim 13, comprising an air-conditioning loop (14) according to any of Claims 1 to 12, **characterized in that** the front ventilation, heating and/or air-conditioning installation (2) houses the condenser (21) which is placed downstream of the main heat exchanger (15) according to a direction of flow (45) of a main air flow (7) in the front ventilation, heating and/or air-conditioning installation (2).

15. Air-conditioning system (1) according to either of Claims 13 and 14, comprising an air-conditioning loop (14) according to any of Claims 3 to 12, **characterized in that** the air-conditioning system (1) comprises a fan (48) and a radiator (47) which forms part of a cooling circuit (47) of an engine of the vehicle, the radiator (47) being positioned between the fan (48) and the coolant/ambient air heat exchanger (27).
